# EUROPEAN PATENT SPECIFICATION

(11) **EP 3 128 713 B1**
(45) Date of publication and mention of the grant of the patent: **29.04.2020**
(21) Application number: 14887954.7
(22) Date of filing: 19.09.2014
(51) Int. Cl.: H04L 29/08

(54) **PAGE PUSH METHOD AND SYSTEM**
PUSH-VERFAHREN FÜR SEITEN UND ENTSPRECHENDES SYSTEM
PROCÉDÉ ET SYSTÈME D'ENVOI DE PAGE

(30) Priority: 04.04.2014 CN 201410136918
(43) Date of publication of application: 08.02.2017
(73) Proprietor: ZTE Corporation, Shenzhen, Guangdong 518057 (CN)
(72) Inventor: HUANG, Sunliang, Shenzhen Guangdong 518057 (CN)
(74) Representative: Iannone, Carlo Luigi
(86) International application number: PCT/CN2014/086985
(87) International publication number: WO 2015/149486

(56) References cited:
- EP-A1- 3 096 492
- WO-A1-2014/048255
- CN-A- 101 217 560
- CN-A- 102 710 777
- CN-A- 103 186 529
- KR-A- 20010 093 040
- FULVIO RISSO ET AL: "Customizing Data-Plane Processing in Edge Routers", SOFTWARE DEFINED NETWORKING (EWSDN), 2012 EUROPEAN WORKSHOP ON, IEEE, 25 October 2012 (2012-10-25), pages 114-120, XP032283480, DOI: 10.1109/EWSDN.2012.14 ISBN: 978-1-4673-4554-5

## Description

### Technical Field

The present invention relates to the field of page pushing, and in particular to a page push method, page push server and a centralized network management controller.

### Background of the Related Art

With the development of Internet, a number of terminals explosively grows, the Internet advertising market rapidly develops, and the pushing of advertisement pages has been prevailing. There are different page push manners for different application scenarios and different systems. Generally, the page push manners can be divided into two types:

### <First type> a page push manner with an application layer link of a user

This type of page pushing is commonly seen in Internet companies such as an Internet Content Provider, called ICP or an Internet Service Provider, called ISP. For example, when the user accesses an Internet website and there is an application layer link between the user and the website, the website can directly push a corresponding page to the user based on the application layer link of the user, or push a corresponding page to the user based on the application layer link of the user in a HyperText Transfer Protocol, called HTTP redirection manner.

### <Second type> a page push manner without an application layer link of a user

This type of page pushing is commonly seen in network operators, the third party advertisers etc. As the user does not directly access contents of the network operators and the third party advertisers, there is no application layer link. Therefore, in such scenario, before a page is pushed to the user, an application link of the user is required to be firstly acquired, and then a corresponding page is pushed to the user in an HTTP redirection manner.

Here, we only concern the page push manner without an application layer link of a user. Currently, there are primarily three implementation methods for the page push manner without an application layer link of a user.

### <First manner> page push method based on portal authentication

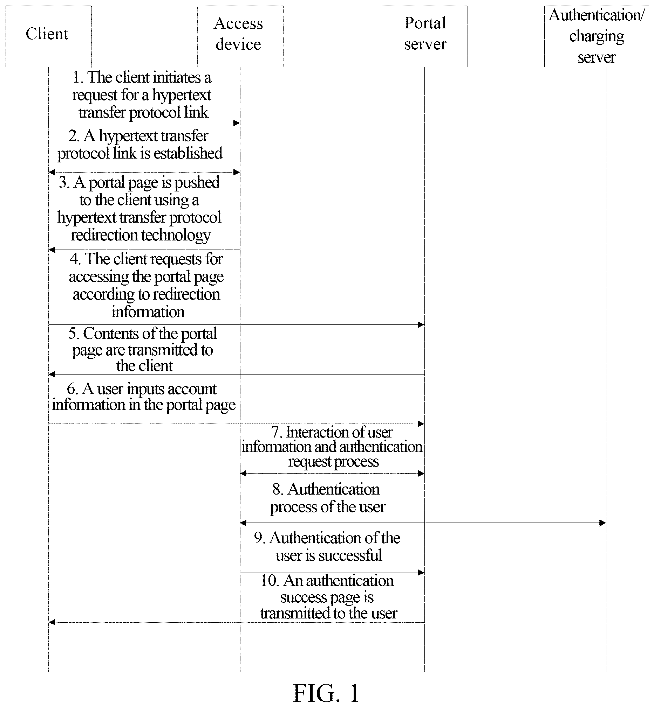

The page push method based on portal authentication is primarily applied in an authentication process when a user accesses a network, and page pushing is implemented in the authentication process of the user. As shown in Fig. 1, the implementation of the method includes a client, an access device, a portal server (the portal server is primarily a server side system for receiving a portal client authentication request, and provides a free portal service and an interface for authentication based on the World Wide Web, and interacts authentication information for authenticating a client with the access device), and an authentication/charging server. A specific service processing procedure is as follows.

In step 1, the client initiates a request for an HTTP link.

In step 2, after the access device receives a data packet of the user, as the user has not been authenticated, the user is required to be firstly authenticated according to an established strategy. In this scenario, a corresponding authentication page is required to be pushed to the user based on a page authentication manner. As the access device does not establish a corresponding application layer link with the user before, before implementing page pushing, HTTP link of the application layer is required to be firstly established. Here, the access device simulates a destination address in the HTTP request of the client to establish an HTTP link with the client.

In step 3, after establishing the HTTP link with the client, the access device pushes a portal page link to the client in an HTTP redirection manner.

In step 4, after receiving HTTP redirection information transmitted by the access device, the client requests for accessing a portal page according to the redirection information.

In step 5, after receiving the request of the client for accessing the portal page, the portal server transmits contents of the corresponding portal page to the client. Thereafter, a specific portal authentication processing procedure is implemented.

In step 6, the user inputs corresponding account information in the portal page to transmit to the portal server.

In step 7, after acquiring the account information of the user, the portal server exchanges information with the access device and transmits an authentication request to the access device through an interaction protocol of the access device, such as a portal protocol.

In step 8, after acquiring the account information of the user through interaction with the portal server, the access device initiates an authentication request to the authentication/charging server based on the user. After receiving the authentication request, the authentication/charging server authenticates the user. If the authentication is successful, the authentication/charging server returns an authentication success message to the access device.

In step 9, after receiving the authentication success message, the access device implements a corresponding user strategy, and transmits a corresponding user authentication success message to the portal server.

In step 10, after receiving the user authentication success message, the portal server pushes an authentication success page to the user.

Features of this page push method include the following.
1. This page pushing method is bound with the authentication process of the user, which is only used for World Wide Web authentication.
2. The first application layer link with the client is established by the way that the access device intercepts HTTP link information of the client and simulates the destination server in the request for a link of the client.

### <Second manner> page push method based on a network device

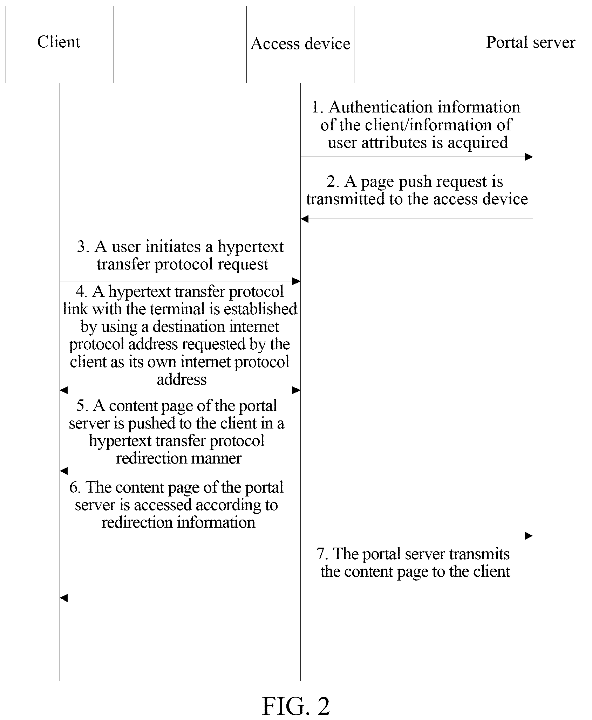

The page push method based on a network device is to solve the problem that the page push method based on a portal is only applied to web authentication, with the hope of pushing a third party page based on a user at any time. As shown in Fig. 2, the implementation of the method includes a client, an access device and a portal server. A specific service processing procedure is as follows.

In step 1, the portal server acquires authentication information of a corresponding client, information of user attributes and the like through the access device as required, to form a page push strategy.

In step 2, the portal server transmits a page push request to the access device according to the formed page push strategy. After the access device receives the corresponding page push request, the access device executes a corresponding action to complete corresponding page push configuration.

In step 3, the client initiates a request for an HTTP link.

In step 4, after receiving an HTTP data packet of a user, the access device judges that a page is required to be pushed to the user. However, as the access device does not establish a corresponding application layer link with the user before, therefore, before implementing page pushing, an HTTP link of the application layer is required to be firstly established. Here, the access device simulates a destination address in the HTTP request of the client to establish an HTTP link with the client.

In step 5, the access device pushes a corresponding page link to the client in an HTTP redirection manner based on the established HTTP link.

In step 6, the client requests for a corresponding content page according to a link of an HTTP redirection message.

In step 7, the portal server transmits contents of the corresponding page to the client.

Features of the page push method include the following.
1. Differently from the first manner, the page pushing is no longer associated with the user authentication process, and page pushing may be initiated as required.
2. The portal server may acquire related user information from the access device; and for the page pushing, the portal server is used to transmit a request to the access device, and the specific page pushing is completed by the access device.
3. The first application layer link with the client is established by the way that the access device intercepts HTTP link information of the client and simulates the destination server in the link request of the client.

### <Third manner> centralized page push method based on a server

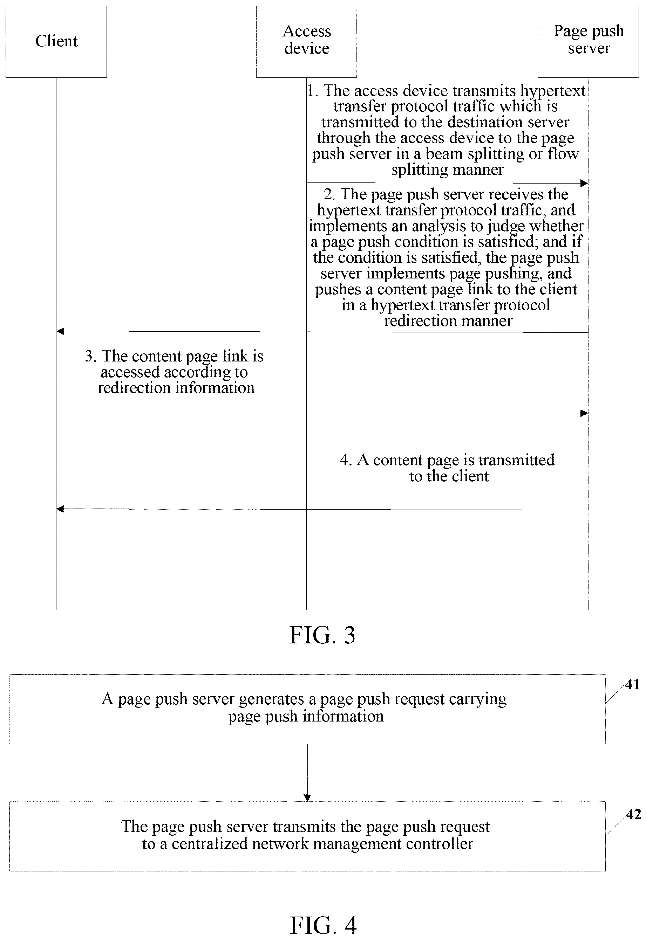

As a new way, the centralized page push method based on a server desires to strip the related processing of the application layer from the network device to be implemented by a centralized server. This method is more suitable for advertisement operators without basic network resources. As shown in Fig. 3, the implementation of the method includes a client, an access device and a page push server. A specific service implementation flow is as follows.

In step 1, the access device transmits HTTP traffic through the device to the page push server in a beam splitting or flow splitting manner.

In step 2, after receiving an HTTP packet, the page push server implements analysis, and judges whether a page push condition is satisfied in conjunction with an established strategy. If the page push condition is satisfied, a corresponding page link is pushed to the client in an HTTP redirection manner.

In step 3, after receiving the HTTP redirection message, the client requests for accessing a corresponding content page according to the contents of the redirection information.

In step 4, the page push server transmits the contents of the corresponding page to the client.

Features of the page push method include the following.
1. Page pushing is implemented by a centralized server.
2. An HTTP packet of the user is acquired in a beam splitting or flow splitting manner.
3. The server analyzes the HTTP packet and judges whether page pushing is implemented.
4. The HTTP redirection message is transmitted by the centralized page push server to the client.

It can be seen from the above analysis that the above three manners have respective suitable scenarios, but also have inherent defects. Strong correlation between the first manner and the user authentication process limits the first manner application scope. The second manner directly interacts with the network device, which results in that the portal server needs to be connected to a lot of network devices, it is difficult to unify protocols, and the deployment workload is large. For the third manner, the HTTP data stream of the user is required to be acquired in a beam splitting or flow splitting manner. The third manner is difficult to implement, the deployment position is limited, there are high requirements for the performance of the server device and the storage capacity. During specific implementation, when security measures such as Unicast Reverse Path Forwarding called URPF and the like are deployed in the network, the pushed service traffic is easy to be abandoned, which results in failure of the services.

The document WO2014048255A1 discloses a Portal push method, which comprises: a broadband remote access server (BRAS) equipment acquiring a website identification list, after the BRAS equipment receiving hypertext transport protocol (HTTP) request messages sent by a user terminal, the BRAS equipment determining whether sending Portal pages to the user terminal or not according to the fact that whether the identification of a target website visited by the user client has a matched item in the list, the embodiments of the present invention further provide corresponding BRAS equipment, the technical solutions of the embodiments of the present invention can reduce push times of invalid Portals and improve Portal push success rate.

### Summary of the Invention

The embodiments of the present invention provide a page push method according to claim 1 and a system according to claim 10, which implement page pushing based on the architecture of the centralized network management controller, avoid direct interaction between the page push server and the network device, and enhances the efficiency of page pushing. Further improvements and embodiments are provided in the dependent claims.

In the embodiments of the present invention, an interaction mechanism between the page push server and the centralized network management controller is designed based on the architecture of the centralized network management controller, so that the page push server only needs to transmit a page push request to the centralized network management controller, and thereby page pushing for a lot of users in the network is achieved. The embodiments of the present invention achieve the effects of centralized controlling and requesting and distributed execution of page pushing, and largely enhance the efficiency of page pushing.

### Brief Description of Drawings

Fig. 1 is a flowchart of a page push method based on portal authentication in the related technology;
Fig. 2 is a flowchart of a page push method based on a network device in the related technology;
Fig. 3 is a flowchart of a centralized page push method based on a server in the related technology;
Fig. 4 is a flowchart of a page push method for a page push server according to an embodiment of the present invention;
Fig. 5 is a flowchart of a page push method for a centralized network management controller according to an embodiment of the present invention;
Fig. 6 is a structural diagram of a page push interaction process according to an embodiment of the present invention;
Fig. 7 is a method diagram of an interaction flow of a page push method according to an embodiment of the present invention;
Fig. 8 is a structural diagram of a page push apparatus for a page push server according to an embodiment of the present invention; and
Fig. 9 is a structural diagram of a page push apparatus for a centralized network management controller according to an embodiment of the present invention.

### Preferred Embodiments of the Invention

In order to make the technical problem to be solved by the embodiments of the present invention, technical solutions and advantages more clear, the present invention will be described in detail below in conjunction with accompanying drawing and specific embodiments. The embodiments of the present invention and the features in the embodiments can be combined randomly without conflict.

The embodiments of the present invention provide a page push method for a page push server. As shown in Fig. 4, the method includes the following steps.

In step 41, a page push request carrying page push information is generated.

In step 42, the page push request is transmitted to a centralized network management controller. Herein operations executed by the centralized network management controller include:
receiving the page push request carrying the page push information transmitted by the page push server;
determining a target user of a page required to be pushed and a target page corresponding to the target user according to the page push information; and
issuing a page push instruction to a target access device corresponding to the target user. Herein, the page push instruction is used to indicate the target access device to push the target page to the target user in a case of receiving a request for a HyperText Transfer Protocol called HTTP link initiated by the target user.

In the method provided in the embodiments of the present invention, the page push server only needs to carry the page push information in the page push request message, and transmits the message to the centralized network management controller, so that the centralized network management controller achieves page pushing for a lot of users in the network. The method achieves the effects of centralized controlling and requesting and distributed execution of page pushing, and largely enhances the efficiency of page pushing.

Herein, the page push information is the information which can make the centralized network management controller know clearly a target user to which a page is required to be pushed and a target page corresponding to the target user. Preferably, the page push information may be determined according to a page push strategy preset on the page push server. The above process is described below by way of examples.

### <Example one>

A preset page push strategy is that page A is pushed to all online users within a certain period of time. Page push information is determined according to the preset page push strategy, so that the centralized network management controller knows clearly users to which the page is required to be pushed (all online users within a certain period of time) and a corresponding target page A.

Of course, in order to achieve finer and more accurate advertisement putting by the operators, the page push information may also be determined jointly by both the page push strategy preset on the page push server and data information provided by the information database.

Correspondingly, the method further includes:
data information required by page pushing is requested from the information database; and
a response message carrying the requested data information is acquired, which is returned from the information database.

The information database here is a server which can provide data information for page pushing. The information database may be an Authentication, Authorization, and Accounting called AAA server, a Customer Relationship Management called CRM server or a third party service server. Of course, the information database is not limited to the above servers. Other servers which can provide data information to more accurately implement page pushing are all within the protection scope of the embodiments of the present invention.

Herein, information of the current online users may be acquired from the AAA server; or the data information corresponding to the current online users may be acquired from the AAA server, the CRM server or the third party service server. Herein, the third party service server may store demand information for advertisement pushing of advertisers etc.

The page push server determines the page push information according to information of user attributes. The page push information may be a target webpage probably interested by the people engaging in a certain type of careers and corresponding to the certain type of careers of the people, which is required to be pushed by the centralized network management controller to the people.

Alternatively, the page push information is determined according to the page consumption information of the current online users. The page push information may be a target webpage determined to be probably interested by the target user.

Alternatively, the page push information is determined according to the third party service information. The page push information may be a target webpage determined to be reserved by the third party service server and required to be pushed to the target user.

The above process is described below by way of examples.

### <Example two>

The page push server determines the page push information from the third party service information acquired on the third party service server. For example, if an advertiser desires to push a page to users of a particular type A, information of current online users (by taking the current online users being users of type A as an example) and third party service information corresponding to the current online users may be acquired from the AAA server and/or centralized network management controller, to determine the page push information in conjunction with the preset page push strategy. Herein, the information of user attributes in the information of the current online users may be specific information which is written by a user for logging in a certain website, for example, a career which is engaged in by the user, an age of the user, and hobbies and interests of the user etc.

Further, the above page push information may further include a network status of the centralized network management controller. The page push server judges whether the current network of the centralized network management controller is available according to the acquired information of the current network status of the centralized network management controller, to acquire a judging result.
when the judging result indicates that the current network of the centralized network management controller is available, a step of transmitting a page push request message carrying the page push information to the centralized network management controller is executed.

Of course, in the embodiments of the present invention, it is not necessary that the page push information may further include a network status of the centralized network management controller. Of course, the page push server may not consider the network status of the centralized network management controller, and periodically transmits a page push request to the centralized network management controller.

The page push server may further acquire a status of the user from the third party service server (for example, AAA server) to determine whether the page pushing may be implemented on the user. Further, when the page pushing may be implemented on the user, the page push information is determined according to the data information of the third party service server, to achieve finer and more accurate advertisement putting.

In the embodiments of the present invention, the page push server is primarily used to transmit a page push request to the centralized network management controller. This page push request is neither oriented to a specific client, nor is oriented to a specific network device, and is merely oriented to the centralized network management controller. The page push request may be based on a single user, or may be based on a batch of clients. This will be described below by way of examples.

### <Example three>

Different page push requests of 10000 users located under 10 network devices may be combined in a page push request to transmit to the centralized network management controller.

At the same time, in the embodiments of the present invention, it should be noted that a page is required to be pushed to online users, and a page cannot be pushed to offline users.

It can be seen from the above process that the method according to the embodiments of the present invention does not need be bound with an authentication process of a user; and the page push server does not need to be connected to a lot of network devices, which is easy to implement. The page push information may be determined according to the preset push strategy, and may also be determined jointly from both the data information acquired from the information database and the preset push strategy. There is no need to acquire the HTTP data stream of the user in a beam splitting or flow splitting manner. The method is easy to implement, and can avoid the problem that when security measures such as URPF and the like are deployed in the network, the pushed service flow is easy to be abandoned, which results in failure of the services.

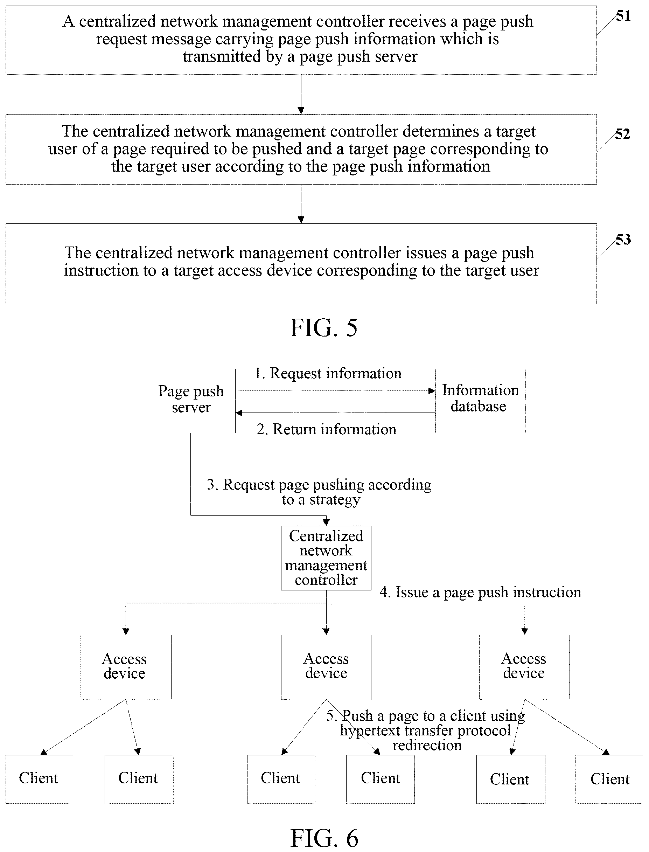

The embodiments of the present invention further provide a page push method. As shown in Fig. 5, the method includes the following steps.

In step 51, a centralized network management controller receives a page push request message carrying page push information which is transmitted by a page push server.

In step 52, the centralized network management controller determines a target user of a page required to be pushed and a target page corresponding to the target user according to the page push information.

In step 53, the centralized network management controller issues a page push instruction to a target access device corresponding to the target user. Herein, the page push instruction is used to indicate the target access device to push the target page to the target user in a case of receiving a request for an HTTP link initiated by the target user.

The centralized network management controller may be an SDN controller, as long as it can achieve centralized issuing of a page push instruction.

The centralized network management controller forms a corresponding page push instruction according to the page push information in the received page push request message and issues the instruction to a target access device, to complete deployment of page pushing.

Herein, when the page push server issues the page push request based on a batch of users, the centralized network management controller may push corresponding target pages to different target users respectively, i.e., in a case that the page push request includes a plurality of pieces of page push information respectively corresponding to a plurality of target users, the page push instruction is further used to indicate one or more target access devices to push corresponding target pages to the plurality of target users respectively in a case of respectively receiving requests for HTTP links initiated by the plurality of target users.

The target access device is an access device where the target user is currently located. Herein, the access device where the target user is currently located is determined according to a specific networking condition, for example, the access device may be an Optical Network Unit called ONU/switcher device accessed by the target user, or may also be a Broadband Remote Access Server called BRAS/full Service Router called SR device etc. which end a point to point protocol over Ethernet, called PPPoE/Internet protocol over Ethernet, called IPoE etc. of a user.

In a case of receiving a request for an HTTP link initiated by the target user, that the target access device pushes the target page to the target user specifically includes:
the target access device receives the request for an HTTP link initiated by the target user;
the target access device simulates a destination server of the target user to establish an HTTP link according to the request for an HTTP link; and
the target access device pushes the target page to the target user in an HTTP redirection manner.

Of course, in the embodiments of the present invention, a page is only pushed to the target user, and other users to which a page is not required to be pushed are not processed. That is, in a case of receiving a request for an HTTP link initiated by the target user, that the target access device pushes the target page to the target user further includes:
the target access device judges whether there is the target page required to be pushed to the target user according to the page push instruction.

That the target access device simulates a destination server of the target user to establish an HTTP link according to the request for an HTTP link specifically includes:
in a case that a judging result is that there is the target page required to be pushed to the target user, the target access device simulates the destination server of the target user to establish the HTTP link according to the request for an HTTP link.

After the target access device detects that there is an HTTP data packet of the target user, the target access device judges whether a page is required to be pushed to the client. In a case that a judging result is that a page is required to be pushed to the user, an HTTP link is established with a client, and page information of a corresponding target webpage is pushed to the client in an HTTP redirection manner. The target user requests for accessing a content page of the target webpage of the page server according to the redirection information. After receiving the page access request of the client, the page server transmits content information of the corresponding page to the client. The page server here may be deployed independently, or may also be collocated with the page push server.

In the above method, the page push server carries the page push information in the page push request message, and transmits the message to the centralized network management controller, and the centralized network management controller implements page pushing for a lot of users in the network. The method achieves the effects of centralized controlling and requesting and distributed execution of page pushing, and largely enhances the efficiency of page pushing.

The above interaction process according to the embodiments of the present invention will be specifically described below.

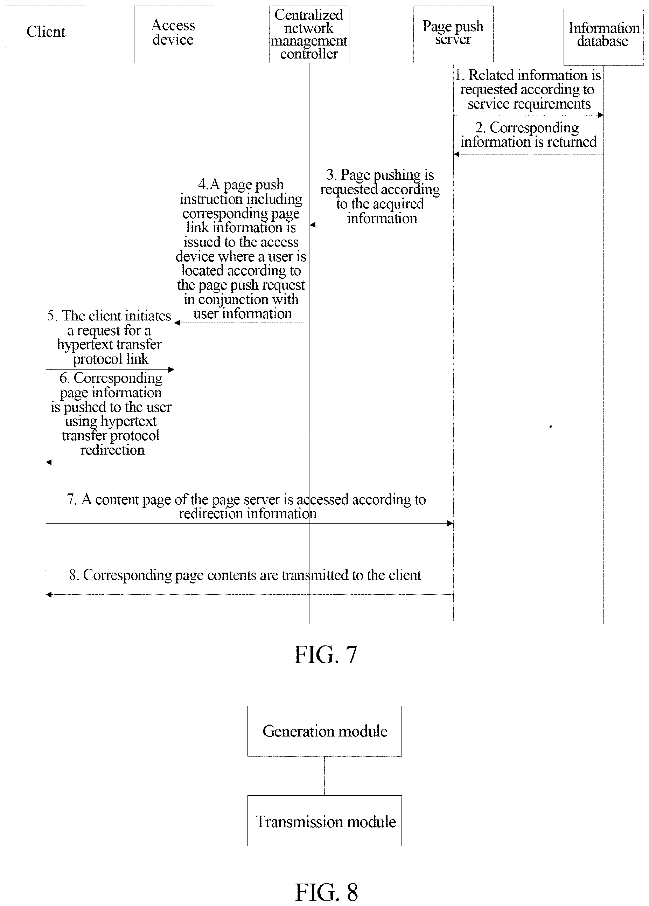

As shown in Figs. 6 and 7, the method includes the following steps.

In step 1, the page push server acquires user information from the information database according to specific service requirements. Herein the user information may include: information of a current network status of the centralized network management controller, information of current online users, information of user attributes or webpage consumption corresponding to the current online users, the third party service information etc.

In step 2, the information database returns corresponding information to the page push server according to the requirements of the page push server.

In step 3, the page push server calls a northbound interface provided by the centralized network management controller to initiate a page push request message to the centralized network management controller according to the acquired page push information in conjunction with the page push strategy.

In step 4, the centralized network management controller forms a corresponding page push instruction according to the received page push request message in conjunction with user information and related information for the maintaining of itself. For example, after analyzing the page push request message, the centralized network management controller determines a target user to which a page is required to be pushed; and determines a target page required to be pushed to the target user, and determines a target access device where the target user is located and a port number of the target access device etc., thereby forming a corresponding instruction. The page push instruction is issued to the corresponding access device through a southbound interface of the centralized network management controller. After receiving the corresponding instruction, the access device executes a related instruction in the device to complete deployment of page pushing.

In step 5, a client of a first target user initiates a request for an HTTP link.

In step 6, after receiving the HTTP request packet of the client, the first target access device makes a judgment. In a case that the first target access device judges that a page is required to be pushed to the client, corresponding page information is pushed to the client of the first target user in an HTTP redirection manner.

In step 7, the first target user requests for accessing the content page of the page server according to the redirection information. The page server may be deployed independently, or may also be collocated with the page push server.

In step 8, after receiving the page access request of the client, the page server transmits content information of the corresponding page to the client of the first target user.

In the embodiments of the present invention, an interaction mechanism between the page push server and the centralized network management controller is designed based on the architecture of the centralized network management controller, so that the page push server only needs to transmit a page push request to the centralized network management controller, and thereby page pushing for a lot of users in the network is achieved. The embodiments of the present invention achieve the effects of centralized controlling and requesting and distributed execution of page pushing, and largely enhance the efficiency of page pushing.

The embodiments of the present invention further provide a page push apparatus used for a page push server. As shown in Fig. 8, the apparatus includes:
a generation module configured to generate a page push request carrying page push information; and
a transmission module configured to transmit the page push request to a centralized network management controller, herein operations executed by the centralized network management controller include:
   receiving the page push request carrying the page push information transmitted by the page push server;
   determining a target user of a page required to be pushed and a target page corresponding to the target user according to the page push information; and
   issuing a page push instruction to a target access device corresponding to the target user, herein, the page push instruction is used to indicate the target access device to push the target page to the target user in a case of receiving a request for a HyperText Transfer Protocol called HTTP link initiated by the target user.

In the above page push apparatus, the page push information is determined according to a page push strategy preset on the page push server.

In the above page push apparatus, the page push information is determined according to a page push strategy preset on the page push server and data information provided by an information database.

The above page push apparatus further includes:
a request module configured to request data information required by page pushing from the information database; and
an acquisition module configured to acquire a response message carrying the requested data information which is returned from the information database.

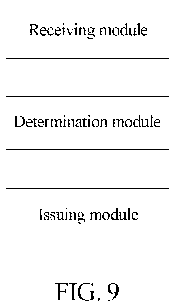

The embodiments of the present invention further provide a page push apparatus. As shown in Fig. 9, the apparatus includes:
a receiving module configured to receive a page push request message carrying page push information which is transmitted by a page push server through a centralized network management controller;
a determination module configured to determine a target user of a page required to be pushed and a target page corresponding to the target user according to the page push information through the centralized network management controller; and
an issuing module configured to issue a page push instruction to a target access device corresponding to the target user through the centralized network management controller, herein the target access device includes a push module configured to push the target page to the target user in a case that the target access device receives a request for a HyperText Transfer Protocol called HTTP link initiated by the target user according to the page push instruction issued by the centralized network management controller.

In the above page push apparatus, in a case that the page push request includes a plurality of pieces of page push information respectively corresponding to a plurality of target users, the page push instruction is further used to indicate one or more target access devices to push corresponding target pages to the plurality of target users respectively in a case of respectively receiving requests for HTTP links initiated by the plurality of target users.

In the above page push apparatus, the target access device is an access device where the target user is currently located.

In the above page push apparatus, the push module includes:
a receiving sub-module configured to receive the request for an HTTP link initiated by the target user through the target access device;
a processing sub-module configured to simulate a destination server of the target user to establish an HTTP link according to the request for an HTTP link through the target access device; and
a pushing sub-module configured to push the target page to the target user in an HTTP redirection manner through the target access device.

In the above page push apparatus, the push module further includes:
a judgment sub-module configured to judge whether there is the target page required to be pushed to the target user according to the page push instruction through the target access device.

The processing sub-module is configured to:
in a case that a judging result is there is the target page required to be pushed to the target user, simulate the destination server of the target user to establish the HTTP link according to the request for an HTTP link through the target access device.

The embodiments of the present invention further provide a page push server, and the server includes:
a generation module configured to generate a page push request carrying page push information; and
a transmission module configured to transmit the page push request to a centralized network management controller, herein operations executed by the centralized network management controller include:
   receiving the page push request carrying the page push information transmitted by the page push server;
   determining a target user of a page required to be pushed and a target page corresponding to the target user according to the page push information; and
   issuing a page push instruction to a target access device corresponding to the target user, herein, the page push instruction is used to indicate the target access device to push the target page to the target user in a case of receiving a request for a HyperText Transfer Protocol called HTTP link initiated by the target user.

The embodiments of the present invention further provide a centralized network management controller, the centralized network management controller includes:
a receiving module configured to receive a page push request message carrying page push information which is transmitted by a page push server through the centralized network management controller;
a determination module configured to determine a target user of a page required to be pushed and a target page corresponding to the target user according to the page push information through the centralized network management controller; and
an issuing module configured to issue a page push instruction to a target access device corresponding to the target user through the centralized network management controller, herein, the page push instruction is used to indicate the target access device to push the target page to the target user according to the page push instruction issued by the centralized network management controller in a case that the target access device receives a request for a HyperText Transfer Protocol called HTTP link initiated by the target user.

The above description is preferable implementations of the present invention. It should be pointed out that a person having ordinary skill in the art can make a number of improvements and modifications without departing from the principle of the present invention.

A person having ordinary skill in the art can understand that all or part of steps in the above embodiments can be implemented by a computer program flow. The computer program can be stored in a computer readable storage medium, and is performed on a corresponding hardware platform (for example, a system, a device, an apparatus, and a component etc.), and when performed, includes one of steps of the method embodiment or a combination thereof.

Alternatively, all or part of steps in the above embodiments can also be implemented by integrated circuits, can be respectively made into a plurality of integrated circuit modules; alternatively, several modules or steps of the steps are made into a single integrated circuit module to be implemented. Thus, the present invention is not limited to any specific combinations of hardware and software.

Each device/functional module/functional unit in the aforementioned embodiments can be implemented with general computing apparatuses, and can be integrated in a single computing apparatus, or distributed in a network consisting of a plurality of computing apparatuses.

When each device/functional module/functional unit in the aforementioned embodiments is implemented in a form of software functional modules and is sold or used as an independent product, it can be stored in a computer readable storage medium, which may be a read-only memory, a disk or a disc etc.

### Industrial applicability

In the embodiments of the present invention, an interaction mechanism between the page push server and the centralized network management controller is designed based on the architecture of the centralized network management controller, so that the page push server only needs to transmit a page push request to the centralized network management controller, and thereby page pushing for a lot of users in the network is achieved. The embodiments of the present invention achieve the effects of centralized controlling and requesting and distributed execution of page pushing, and largely enhance the efficiency of page pushing.

## Claims

1. A page push method, comprising:
receiving, by a centralized network management controller, a page push request message carrying page push information transmitted by a page push server (51);
determining, by the centralized network management controller, a target user of a page required to be pushed and a target page corresponding to the target user according to the page push information (52); and
issuing, by the centralized network management controller, a page push instruction to a target access device corresponding to the target user, wherein, the page push instruction is used to indicate the target access device to push the target page to the target user in a case of receiving a request for a HyperText Transfer Protocol, HTTP, link initiated by the target user (53).

2. The page push method according to claim 1, wherein,
generating, by the page push server, the page push request carrying the page push information (41); and
transmitting, by the page push server, the page push request to a centralized network management controller (42).

3. The page push method according to claim 1, wherein the page push information is determined according to a page push strategy preset on the page push server.

4. The page push method according to claim 1, wherein the page push information is determined according to a page push strategy preset on the page push server and data information provided by an information database.

5. The page push method according to claim 4, further comprising:
requesting, by the page push server, data information required by page pushing from the information database; and
acquiring, by the page push server, a response message carrying the requested data information returned from the information database.

6. The page push method according to claim 1, wherein in a case that the page push request comprises a plurality of pieces of page push information respectively corresponding to a plurality of target users, the page push instruction is further used to indicate one or more target access devices to push corresponding target pages to the plurality of target users respectively in a case of respectively receiving requests for HTTP links initiated by the plurality of target users.

7. The page push method according to claim 1, wherein the target access device is an access device where the target user is currently located.

8. The page push method according to any of claims 1-7, wherein in the case of receiving a request for an HTTP link initiated by the target user, pushing, by the target access device, the target page to the target user comprises:
receiving, by the target access device, the request for an HTTP link initiated by the target user;
simulating, by the target access device, a destination server of the target user to establish an HTTP link according to the request for an HTTP link; and
pushing, by the target access device, the target page to the target user in an HTTP redirection manner.

9. The page push method according to claim 8, wherein in the case of receiving a request for an HTTP link initiated by the target user, pushing, by the target access device, the target page to the target user further comprises:
judging, by the target access device, whether there is the target page required to be pushed to the target user according to the page push instruction; and
simulating, by the target access device, a destination server of the target user to establish an HTTP link according to the request for an HTTP link comprises:
in a case that a judging result is that there is the target page required to be pushed to the target user, simulating, by the target access device, the destination server of the target user to establish the HTTP link according to the request for an HTTP link.

10. A centralized network management controller, comprising:
a receiving module configured to receive a page push request message carrying page push information transmitted by a page push server (51);
a determination module configured to determine a target user of a page required to be pushed and a target page corresponding to the target user according to the page push information (52); and
an issuing module configured to issue a page push instruction to a target access device corresponding to the target user, the page push instruction indicating the target access device to push the target page to the target user in a case of receiving a request for a HyperText Transfer Protocol, HTTP, link initiated by the target user (53).

11. A system comprising the centralized network management controller according to claim 10 and further comprising the page push server, wherein the page push server comprises:
a generation module configured to generate the page push request carrying the page push information (41); and
a transmission module configured to transmit the page push request to the centralized network management controller (42).

12. The system according to claim 11, wherein the generation module is further configured to determine the page push information according to a page push strategy preset on the page push server,
or,
wherein the generation module is further configured to determine the page push information according to a page push strategy preset on the page push server and data information provided by an information database.

13. The system according to claim 12, wherein the page push server further comprises:
a request module configured to request data information required by page pushing from the information database; and
an acquisition module configured to acquire a response message carrying the requested data information returned from the information database.

14. A system comprising the centralized network management controller according to claim 10, and further comprising the target access device or a plurality of target access devices including the target access device, wherein in a case that the page push request comprises a plurality of pieces of page push information respectively corresponding to a plurality of target users, the page push instruction is further indicating the one or more target access devices to push corresponding target pages to the plurality of target users respectively in a case of respectively receiving requests for HTTP links initiated by the plurality of target users,
and,
wherein the target access device is an access device where the target user is currently located.

15. A system comprising the centralized network management controller according to claim 10 further comprising the target access device, or a system according to any of claims 10-13 further comprising the target access device, or a system according to claim 14, wherein the target access device is configured to receive the request for an HTTP link initiated by the target user, judge according to the page push instruction whether the target page is required to be pushed to the target user, and in the affirmative, simulate a destination server of the target user to establish an HTTP link according to the request for an HTTP link and push the target page to the target user in an HTTP redirection manner.

## Patentansprüche

1. Seiten-Push-Verfahren, umfassend:
durch einen zentralisierten Network Management Controller, Empfangen einer Seiten-Push-Anforderungsnachricht, die Seiten-Push-Informationen trägt, die durch einen Seiten-Push-Server gesendet werden (51);
durch den zentralisierten Network Management Controller, Bestimmen eines Zielbenutzers einer Seite, deren Push erforderlich ist, und einer Zielseite, die dem Zielbenutzer entspricht, gemäß den Seiten-Push-Informationen (52); und
durch den zentralisierten Network Management Controller, Ausgeben einer Seiten-Push-Anweisung an eine Zielzugriffsvorrichtung, die dem Zielbenutzer entspricht, wobei die Seiten-Push-Anweisung verwendet wird, um die Zielzugriffsvorrichtung für den Push der Zielseite zu dem Zielbenutzer in einem Fall des Empfangens einer durch den Zielbenutzer eingeleiteten Anforderung für eine HyperText Transfer Protocol, HTTP-Verknüpfung anzugeben (53).

2. Seiten-Push-Verfahren nach Anspruch 1, wobei
durch den Seiten-Push-Server, Erzeugen der Seiten-Push-Anforderung, die die Seiten-Push-Informationen trägt (41); und
durch den Seiten-Push-Server, Senden der Seiten-Push-Anforderung an einen zentralisierten Network Management Controller (42).

3. Seiten-Push-Verfahren nach Anspruch 1, wobei die Seiten-Push-Informationen gemäß einer auf dem Seiten-Push-Server voreingestellten Seiten-Push-Strategie bestimmt werden.

4. Seiten-Push-Verfahren nach Anspruch 1, wobei die Seiten-Push-Informationen gemäß einer auf dem Seiten-Push-Server voreingestellten Seiten-Push-Strategie und von einer Informationsdatenbank bereitgestellten Dateninformationen bestimmt werden.

5. Seiten-Push-Verfahren nach Anspruch 4, ferner umfassend:
durch den Seiten-Push-Server, Anfordern von Dateninformationen, die für das Seiten-Pushing erforderlich sind, von der Informationsdatenbank; und
durch den Seiten-Push-Server, Erfassen einer Antwortnachricht, die die von der Informationsdatenbank zurückgegebenen angeforderten Dateninformationen trägt.

6. Seiten-Push-Verfahren nach Anspruch 1, wobei in einem Fall, in dem die Seiten-Push-Anforderung eine Vielzahl von Seiten-Push-Informationselementen umfasst, die jeweils einer Vielzahl von Zielbenutzern entsprechen, die Seiten-Push-Anweisung ferner verwendet wird, um in einem Fall, in dem jeweils von der Vielzahl von Zielbenutzern eingeleitete Anforderungen für HTTP-Verknüpfungen empfangen werden, eine oder mehrere Zielzugriffsvorrichtungen für den Push entsprechender Zielseiten an die Vielzahl von jeweiligen Zielbenutzern anzugeben.

7. Seiten-Push-Verfahren nach Anspruch 1, wobei die Zielzugriffsvorrichtung eine Zugriffsvorrichtung ist, an der der Zielbenutzer sich gegenwärtig befindet.

8. Seiten-Push-Verfahren nach einem der Ansprüche 1 bis 7, wobei in dem Fall, in dem eine von dem Benutzer eingeleitete Anforderung für eine HTTP-Verknüpfung empfangen wird, das Pushing der Zielseite durch die Zielzugriffsvorrichtung zu dem Zielbenutzer umfasst:
durch die Zielzugriffsvorrichtung, Empfangen der durch den Zielbenutzer eingeleiteten Anforderung für eine HTTP-Verknüpfung;
durch die Zielzugriffsvorrichtung, Simulieren eines Ziel-Servers des Zielbenutzers, um eine HTTP-Verknüpfung gemäß der Anforderung für eine HTTP-Verknüpfung herzustellen; und
durch die Zielzugriffsvorrichtung, Pushing der Zielseite zu dem Zielbenutzer auf die Art einer HTTP-Umleitung.

9. Seiten-Push-Verfahren nach Anspruch 8, wobei im Fall des Empfangens einer durch den Zielbenutzer eingeleiteten Anforderung für eine HTTP-Verknüpfung das Pushing der Zielseite durch die Zielzugriffsvorrichtung zu dem Zielbenutzer ferner umfasst:
durch die Zielzugriffsvorrichtung, Beurteilen, ob die Ziel-Seite, deren Push zu dem Zielbenutzer erforderlich ist, vorhanden ist, gemäß der Seiten-Push-Anweisung; und
das Simulieren eines Ziel-Servers des Zielbenutzers zum Herstellen einer HTTP-Verknüpfung gemäß der Anforderung für eine HTTP-Verknüpfung durch die Zielzugriffsvorrichtung umfasst:
in einem Fall, in dem ein Beurteilungsergebnis ist, dass die Zielseite, deren Push zu dem Zielbenutzer vorhanden ist, durch die Zielzugriffsvorrichtung, Simulieren des Ziel-Servers des Zielbenutzers zum Herstellen der HTTP-Verknüpfung gemäß der Anforderung für eine HTTP-Verknüpfung.

10. Zentralisierter Network Management Controller, umfassend:
ein Empfangsmodul, das ausgestaltet ist, um eine Seiten-Push-Anforderungsnachricht zu empfangen, die durch einen Seiten-Push-Server gesendete Seiten-Push-Informationen trägt (51);
ein Bestimmungsmodul, das ausgestaltet ist, um einen Zielbenutzer einer Seite, deren Push erforderlich ist, und eine Zielseite, die dem Zielbenutzer entspricht, gemäß den Seiten-Push-Informationen für die Seite zu bestimmen (52); und
ein Ausgabemodul, das ausgestaltet ist, um eine Seiten-Push-Anweisung an eine Zielzugriffsvorrichtung auszugeben, die dem Zielbenutzer entspricht, wobei die Seiten-Push-Anweisung die Zielzugriffsvorrichtung für den Push der Zielseite zum Zielbenutzer in einem Fall des Empfangens einer durch den Zielbenutzer eingeleiteten Anforderung für eine HyperText Transfer Protocol, HTTP-Verknüpfung angibt (53).

11. System, das den zentralisierten Network Management Controller nach Anspruch 10 umfasst und ferner den Seiten-Push-Server umfasst, wobei der Seiten-Push-Server umfasst:
ein Erzeugungsmodul, das ausgestaltet ist, um die Seiten-Push-Anforderung zu erzeugen, die die Seiten-Push-Informationen (41) trägt; und
ein Sendemodul, das ausgestaltet ist, um die Seiten-Push-Anforderung an den zentralisierten Network Management Controller (42) zu senden.

12. System nach Anspruch 11, wobei das Erzeugungsmodul ferner ausgestaltet ist, um die Seiten-Push-Informationen gemäß der auf dem Seiten-Push-Server voreingestellten Seiten-Push-Strategie zu bestimmen,
oder
wobei das Erzeugungsmodul ferner ausgestaltet ist, um die Seiten-Push-Informationen gemäß einer auf dem Seiten-Push-Server voreingestellten Seiten-Push-Strategie und durch eine Informationsdatenbank bereitgestellten Dateninformationen zu bestimmen.

13. System nach Anspruch 12, wobei der Seiten-Push-Server ferner umfasst:
ein Anforderungsmodul, das ausgestaltet ist, um für das Seiten-Pushing erforderliche Dateninformationen von der Informationsdatenbank anzufordern; und
ein Erfassungsmodul, das ausgestaltet ist, um eine Antwortnachricht zu erfassen, die die von der Informationsdatenbank zurückgegebenen angeforderten Dateninformationen trägt.

14. System, das einen zentralisierten Network Management Controller nach Anspruch 10 umfasst und ferner die Zielzugriffsvorrichtung oder eine Vielzahl von Zielzugriffsvorrichtungen umfasst, die die Zielzugriffsvorrichtung umfassen, wobei in einem Fall, in dem die Seiten-Push-Anforderung eine Vielzahl von Seiten-Push-Informationselementen umfasst, die jeweils einer Vielzahl von Zielbenutzern entsprechen, die Seiten-Push-Anweisung ferner die eine oder mehreren Zielzugriffsvorrichtungen für den Push entsprechender Zielseiten an die Vielzahl von jeweiligen Zielbenutzern in einem Fall angibt, in dem jeweils durch die Vielzahl von Zielbenutzern eingeleitete Anforderungen für HTTP-Verknüpfungen empfangen werden,
und
wobei die Zielzugriffsvorrichtung eine Zugriffsvorrichtung ist, wo der Zielbenutzer sich gegenwärtig befindet.

15. System, das den zentralisierten Network Management Controller nach Anspruch 10 umfasst, das ferner die Zielzugriffsvorrichtung oder ein System nach einem der Ansprüche 10 bis 13, das ferner die Zielzugriffsvorrichtung umfasst, oder ein System nach Anspruch 14 umfasst, wobei die Zielzugriffsvorrichtung ausgestaltet ist, um die durch den Zielbenutzer eingeleitete Anforderung für eine HTTP-Verknüpfung zu empfangen, gemäß der Seiten-Push-Anweisung zu beurteilen, ob der Push der Zielseite zu dem Zielbenutzer erforderlich ist, und, wenn dies der Fall ist, einen Ziel-Server des Zielbenutzers zu simulieren, um eine HTTP-Verknüpfung gemäß der Anforderung für eine HTTP-Verknüpfung herzustellen und den Push der Zielseite zu dem Zielbenutzer nach Art einer HTTP-Umleitung auszuführen.

## Revendications

1. Un procédé d'envoi de page, comprenant :
la réception, par un contrôleur de gestion de réseau centralisé, d'un message de requête d'envoi de page portant des informations d'envoi de page transmises par un serveur d'envoi de page (51) ;
la détermination, par le contrôleur de gestion de réseau centralisé, d'un utilisateur cible d'une page nécessitant d'être envoyée et d'une page cible correspondant à l'utilisateur cible selon les informations d'envoi de page (52) ; et
l'émission, par le contrôleur de gestion de réseau centralisé, d'une instruction d'envoi de page à un dispositif d'accès cible correspondant à l'utilisateur cible, dans lequel l'instruction d'envoi de page est utilisée pour indiquer au dispositif d'accès cible d'envoyer la page cible à l'utilisateur cible dans un cas de réception d'une requête pour une liaison de protocole de transfert hypertexte, HTTP, déclenchée par l'utilisateur cible (53).

2. Le procédé d'envoi de page selon la revendication 1, dans lequel,
la génération, par le serveur d'envoi de page, de la requête d'envoi de page portant les informations d'envoi de page (41) ; et
la transmission, par le serveur d'envoi de page, de la requête d'envoi de page à un contrôleur de gestion de réseau centralisé (42).

3. Le procédé d'envoi de page selon la revendication 1, dans lequel les informations d'envoi de page sont déterminées selon une stratégie d'envoi de page prédéfinie sur le serveur d'envoi de page.

4. Le procédé d'envoi de page selon la revendication 1, dans lequel les informations d'envoi de page sont déterminées selon une stratégie d'envoi de page prédéfinie sur le serveur d'envoi de page et des informations de données fournies par une base de données d'informations.

5. Le procédé d'envoi de page selon la revendication 4, comprenant en outre :
la requête, par le serveur d'envoi de page, d'informations de données nécessaires pour un envoi de page auprès de la base de données d'informations ; et
l'acquisition, par le serveur d'envoi de page, d'un message de réponse portant les informations de données requises renvoyées à partir de la base de données d'informations.

6. Le procédé d'envoi de page selon la revendication 1, dans lequel dans un cas où la requête d'envoi de page comprend une pluralité d'éléments d'informations d'envoi de page correspondant respectivement à une pluralité d'utilisateurs cibles, l'instruction d'envoi de page est en outre utilisée pour indiquer à un ou plusieurs dispositifs d'accès cibles d'envoyer des pages cibles correspondantes à la pluralité d'utilisateurs cibles respectivement dans un cas de réception respective de requêtes pour des liaisons HTTP déclenchées par la pluralité d'utilisateurs cibles.

7. Le procédé d'envoi de page selon la revendication 1, dans lequel le dispositif d'accès cible est un dispositif d'accès où l'utilisateur cible est actuellement situé.

8. Le procédé d'envoi de page selon l'une quelconque des revendications 1 à 7, dans lequel dans le cas de réception d'une requête pour une liaison HTTP déclenchée par l'utilisateur cible, l'envoi, par le dispositif d'accès cible, de la page cible à l'utilisateur cible comprend :
la réception, par le dispositif d'accès cible, de la requête pour une liaison HTTP déclenchée par l'utilisateur cible ;
la simulation, par le dispositif d'accès cible, d'un serveur de destination de l'utilisateur cible pour établir une liaison HTTP selon la requête pour une liaison HTTP ; et
l'envoi, par le dispositif d'accès cible, de la page cible à l'utilisateur cible à la manière d'une redirection HTTP.

9. Le procédé d'envoi de page selon la revendication 8, dans lequel dans le cas de réception d'une requête pour une liaison HTTP déclenchée par l'utilisateur cible, l'envoi, par le dispositif d'accès cible, de la page cible à l'utilisateur cible comprend en outre :
l'évaluation, par le dispositif d'accès cible, de s'il existe ou non la page cible nécessitant d'être envoyée à l'utilisateur cible selon l'instruction d'envoi de page ; et
la simulation, par le dispositif d'accès cible, d'un serveur de destination de l'utilisateur cible pour établir une liaison HTTP selon la requête pour une liaison HTTP comprend :
dans un cas où un résultat d'évaluation est que la page cible nécessitant d'être envoyée à l'utilisateur cible existe, la simulation, par le dispositif d'accès cible, du serveur de destination de l'utilisateur cible pour établir la liaison HTTP selon la requête pour une liaison HTTP.

10. Un contrôleur de gestion de réseau centralisé comprenant :
un module de réception configuré pour recevoir un message de requête d'envoi de page portant des informations d'envoi de page transmises par un serveur d'envoi de page (51) ;
un module de détermination configuré pour déterminer un utilisateur cible d'une page nécessitant d'être envoyée et d'une page cible correspondant à l'utilisateur cible selon les informations d'envoi de page (52) ; et
un module d'émission configuré pour émettre une instruction d'envoi de page à un dispositif d'accès cible correspondant à l'utilisateur cible, l'instruction d'envoi de page indiquant au dispositif d'accès cible d'envoyer la page cible à l'utilisateur cible dans un cas de réception d'une requête pour une liaison de protocole de transfert hypertexte, HTTP, déclenchée par l'utilisateur cible (53).

11. Un système comprenant le contrôleur de gestion de réseau centralisé selon la revendication 10 et comprenant en outre le serveur d'envoi de page, dans lequel le serveur d'envoi de page comprend :
un module de génération configuré pour générer la requête d'envoi de page portant les informations d'envoi de page (41) ; et
un module de transmission configuré pour transmettre la requête d'envoi de page au contrôleur de gestion de réseau centralisé (42).

12. Le système selon la revendication 11, dans lequel le module de génération est en outre configuré pour déterminer les informations d'envoi de page selon une stratégie d'envoi de page prédéfinie sur le serveur d'envoi de page,
ou,
dans lequel le module de génération est en outre configuré pour déterminer les informations d'envoi de page selon une stratégie d'envoi de page prédéfinie sur le serveur d'envoi de page et des informations de données fournies par une base de données d'informations.

13. Le système selon la revendication 12, dans lequel le serveur d'envoi de page comprend en outre :
un module de requête configuré pour requérir des informations de données nécessaires pour un envoi de page auprès de la base de données d'informations ; et
un module d'acquisition configuré pour acquérir un message de réponse contenant les informations de données requises renvoyées à partir de la base de données d'informations.

14. Un système comprenant le contrôleur de gestion de réseau centralisé selon la revendication 10, et comprenant en outre le dispositif d'accès cible ou une pluralité de dispositifs d'accès cibles incluant le dispositif d'accès cible, dans lequel dans un cas où la requête d'envoi de page comprend une pluralité d'éléments d'informations d'envoi de page correspondant respectivement à une pluralité d'utilisateurs cibles, l'instruction d'envoi de page indique en outre au un ou plusieurs dispositifs d'accès cibles d'envoyer des pages cibles correspondantes à la pluralité d'utilisateurs cibles respectivement dans un cas de réception respective de requêtes pour des liaisons HTTP déclenchées par la pluralité d'utilisateurs cibles,
et,
dans lequel le dispositif d'accès cible est un dispositif d'accès où l'utilisateur cible est actuellement situé.

15. Un système comprenant le contrôleur de gestion de réseau centralisé selon la revendication 10 comprenant en outre le dispositif d'accès cible, ou un système selon l'une quelconque des revendications 10 à 13 comprenant en outre le dispositif d'accès cible, ou un système selon la revendication 14, le dispositif d'accès cible étant configuré pour recevoir la requête pour une liaison HTTP déclenchée par l'utilisateur cible, évaluer selon l'instruction d'envoi de page si la page cible nécessite d'être envoyée à l'utilisateur cible et, dans l'affirmative, simuler un serveur de destination de l'utilisateur cible pour établir une liaison HTTP selon la requête pour une liaison HTTP et envoyer la page cible à l'utilisateur cible à la manière d'une redirection HTTP.
